# EUROPEAN PATENT APPLICATION

(11) **EP 3 647 620 A1**
(43) Date of publication of application: **06.05.2020**
(21) Application number: 19201586.5
(22) Date of filing: 07.10.2019
(51) Int. Cl.: F16D 13/64

(54) **VEHICLE CLUTCHES**

(30) Priority: 30.10.2018 GB 201817744
(71) Applicant: AP Automotive Products Srl, 60030 Moie di Maiolati (IT)
(72) Inventor: Mazzarini, Nicola, 60030 Jesi, (IT)
(74) Representative: Morrall, Roger

(57) **Abstract**

A clutch plate comprising a central hub member and a drive disc drivably connected with the hub on which a radially outer friction facing material is carried. The hub member has inner splines for connection with a drive shaft and outer radially extending drive formations engaged with clearance in complementary drive formations in the inner periphery of the drive disc to allow the hub member to float radially relative to the drive disc. The drive disc having an array of circumferentially spaced apertures therein to reduce the radial and axial stiffness of the disc so that the connection between the hub member and the drive disc and the drive disc aperture array accommodates axial and radial vibration pulsations in the clutch disc and any radial misalignments in the associated clutch when the clutch plate is transmitting torque.

## Description

This invention relates to vehicle clutches and in particular to such clutches for transmitting high torques through a vehicle driveline.

Such clutches suffer from operational problems associated with radial and axial vibrations during use and these problems can also be increased due to radial misalignments in the rotating components of the clutch and driveline.

It is an object of the present invention to provide a clutch plate which is alleviates the above radial and axial vibration and misalignment problems.

Thus according to the present invention there is provided a clutch plate comprising a central hub member and a drive disc drivably connected with the hub on which a radially outer friction facing material is carried, the hub member having inner splines for connection with a drive shaft and outer radially extending drive formations engaged with clearance in complementary drive formations in the inner periphery of the drive disc to allow the hub member to float radially relative to the drive disc, the drive disc having an array of circumferentially spaced apertures therein to reduce the radial and axial stiffness of the disc so that the floating connection between the hub member and the drive disc and the drive disc aperture array accommodates axial and radial vibration pulsations in the clutch disc and any radial misalignments in the associated clutch when the clutch plate is transmitting torque.

The array of circumferentially spaced apertures in the drive disc significantly reduces radial and axial stiffness of the drive disc to assist in damping the radial and axial vibrations in the driveline and to accommodate any radial misalignments.

The array of apertures may include circumferentially spaced generally tear drop shaped apertures and/or circumferentially spaced generally triangular apertures with rounded corners and/or circumferentially spaced generally circular apertures and/or circumferentially spaced generally kidney shaped apertures.

The drive formations in the inner periphery of the disc may comprise radially outwardly extending slots having curved radially outermost ends to reduce stress concentrations in the disc, these slots receiving the radially outwardly extending formations on the hub member with sufficient clearance to accommodate the vibration pulsations in the clutch disc and any radial misalignments in the associated clutch.

The outer friction material may be bonded to an outer peripheral portion of the drive disc.

In an alternative design the outer friction material may be mounted on a metal support which is rivetted or otherwise mechanically secured to the outer periphery of the drive disc.

The clutch plate of the present invention can be used in a single plate clutch where it is clamped between, for example, a flywheel and a pressure plate carried by a clutch housing. The clutch plate is also suitable for use in a multi-plate clutch where a stack of such plates is interleaved with plates carried by a clutch housing.

The present invention will now be described, by way of example only, with reference to the accompanying drawings in which :-
Figure 1 shows a plan view of a clutch plate in accordance with the present invention;
Figures 2A and 2B show on a larger scale the hub member and part of the drive disc of the clutch platen of Figure 1 with the hub in a centred position relative to the drive disc and in a misaligned position respectively;
Figures 3 shows the clutch platen of Figure 1 with the drive disc in a loaded and radially and axially deformed position;
Figure 4 shows a section on the line Z-Z of Figure 3 showing the axial deformation exaggerated slightly for clarity ;
Figure 5 shows a stack of two clutch plates in accordance with the present invention mounted on a single hub member for use in a multi-plate clutch;
Figure 6 shows an example of the reduction in stiffness which can be achieved in a typical clutch plate in accordance with the present invention compared to a clutch plate with no apertures in its drive disc;
Figure 7 shows a plan view of a clutch plate in accordance with the present invention in which the friction material is carried on both sides of a metal annular support disc rivetted to the outer periphery of the drive disc;
Figure 8 shows a stack of three rivetted clutch plates as shown in Figure 7 mounted on a single hub member for use in a multi-plate clutch, and
Figures 9A to 9I show examples of different aperture layouts for use in a clutch disc in accordance with the present invention.

Referring to the drawings, a clutch plate 10 has a central hub member 11 and a drive disc 12 drivably connected with the hub on which a radially outer friction facing material 13 is carried. The hub member 11 has inner splines 14 for connection with a drive shaft (not shown) and outer radially extending drive formations 15 engaged in complementary drive formations in the form of slots 16 in the inner periphery of the drive disc. For example, in one arrangement used, the drive formations 15 and 16 are radially tapering with a circumferential clearance of 0.15mm to 0.5mm provided between the slots 16 and the drive formations 15 to allow the hub member 11 to float radially relative to the drive disc 12. The drive disc 12 has an array of circumferentially spaced apertures 17 and 18 formed therein to reduce the radial and axial stiffness of the disc so that the disc can deform both radially and axially to accommodate radial and axial vibration pulsations in the clutch disc during the transmission of torque and any radial misalignments in the associated clutch.

The general shape of the formations 15 and 16 is determined by the amount of misalignment which it is desired to accommodate without causing excessive backlash and too high levels of stresses in the components.

The drive disc 12 also has the customary radial thermal relief slots 12a and the friction facing material 13 is bonded onto both sides of the outer peripheral portion of the drive disc.

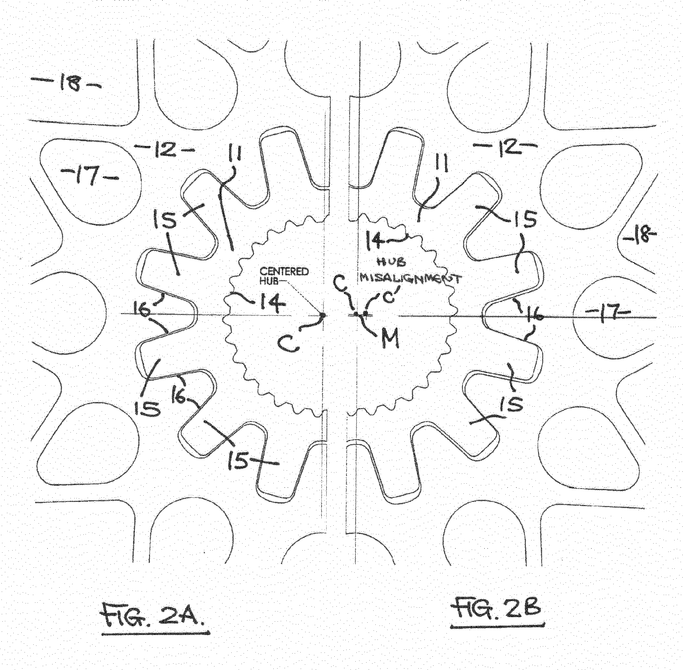

Lefthand Figure 2A shows the hub 11 centred on the centre C of the drive disc 12 whilst righthand Figure 2B shows the slots 16 and drive formations 15 accommodating a misalignment M of hub 11 with the hubs centre now at C' spaced from the drive disc centre C.

The apertures 17 in the drive disc 12 are generally tear drop shaped and the apertures 18 are generally triangular with rounded corners. This array of circumferentially spaced apertures in the drive disc significantly reduces radial and axial stiffness of the drive disc to assist in damping the radial and axial vibrations in the driveline and to accommodate any radial misalignments.

The layout of the apertures is chosen to reduce the maximum stresses induced in the drive disc and can be determined by the use of finite element analysis as is normal in stress analysis.

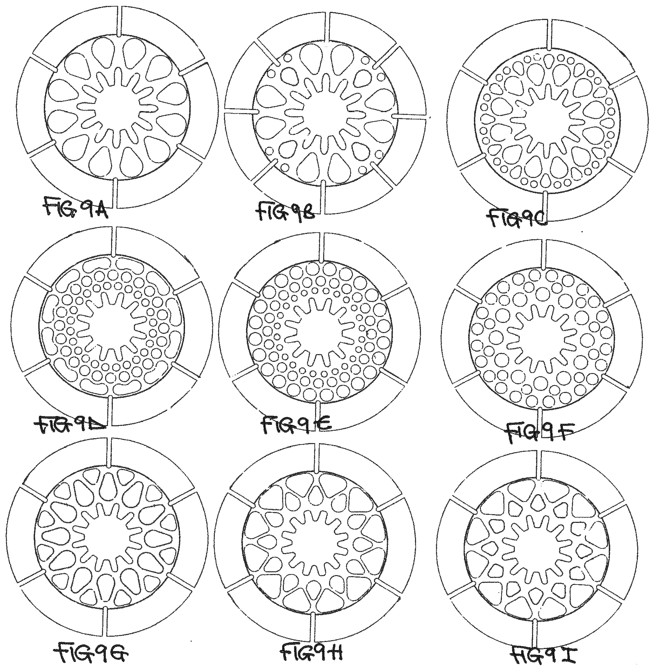

As can be seen from Figures 9A to 9I (discussed below) a wide variety of aperture arrays are possible depending on the clutch installation involved and the torque levels to be transmitted.

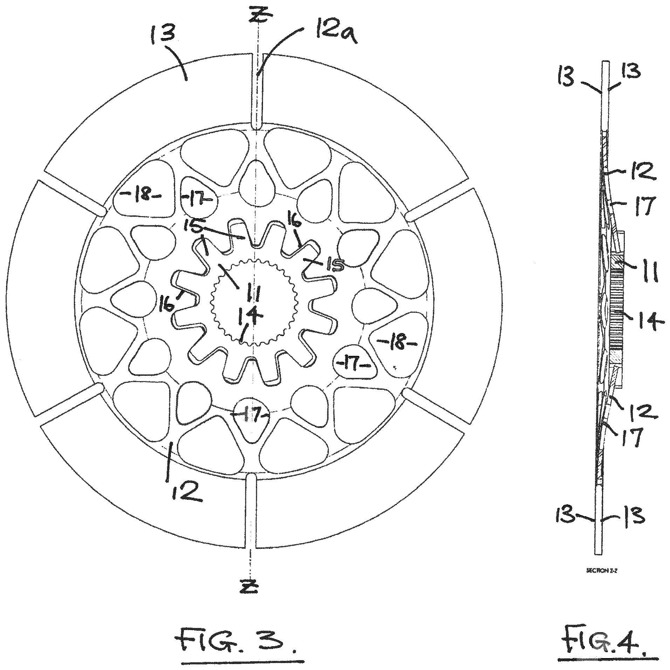

Figures 3 and 4 show the clutch plate 10 in a radially and axially deformed condition during the transmission of torque, Figure 4 showing the significant amount of axial deformation which can be accommodated when the clutch plate is in use, the deformation being exaggerated for clarity as this axial deformation is typically 0.1mm to 0.5mm for a drive disc diameter of 140mm to 200mm.

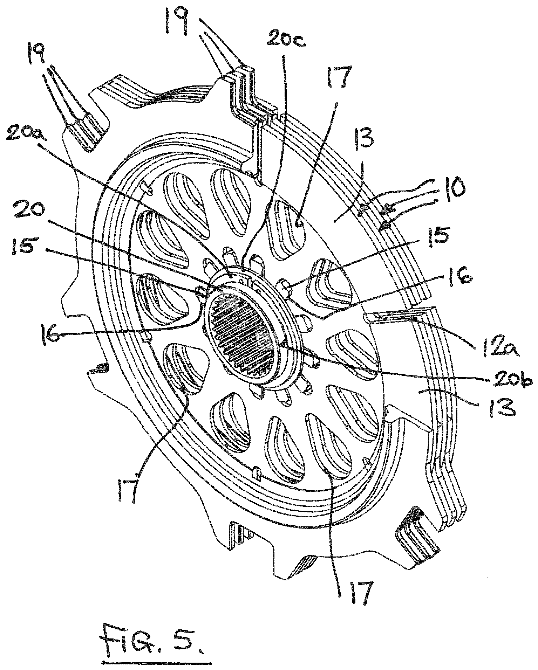

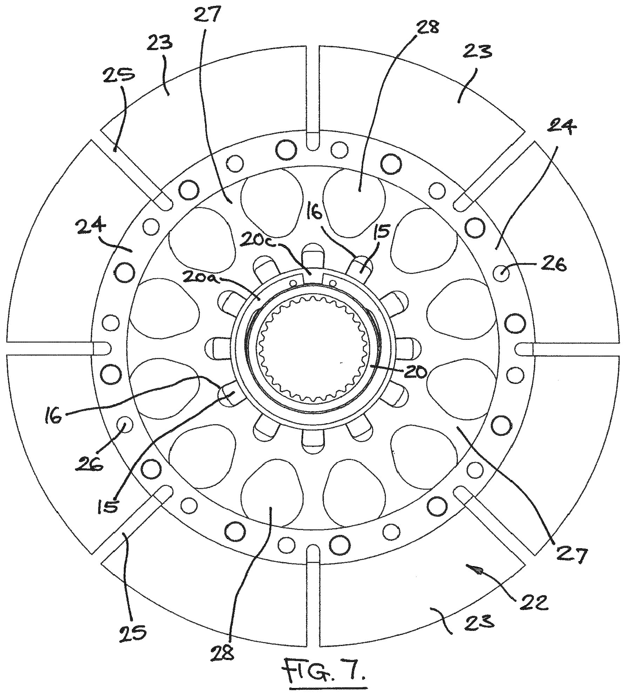

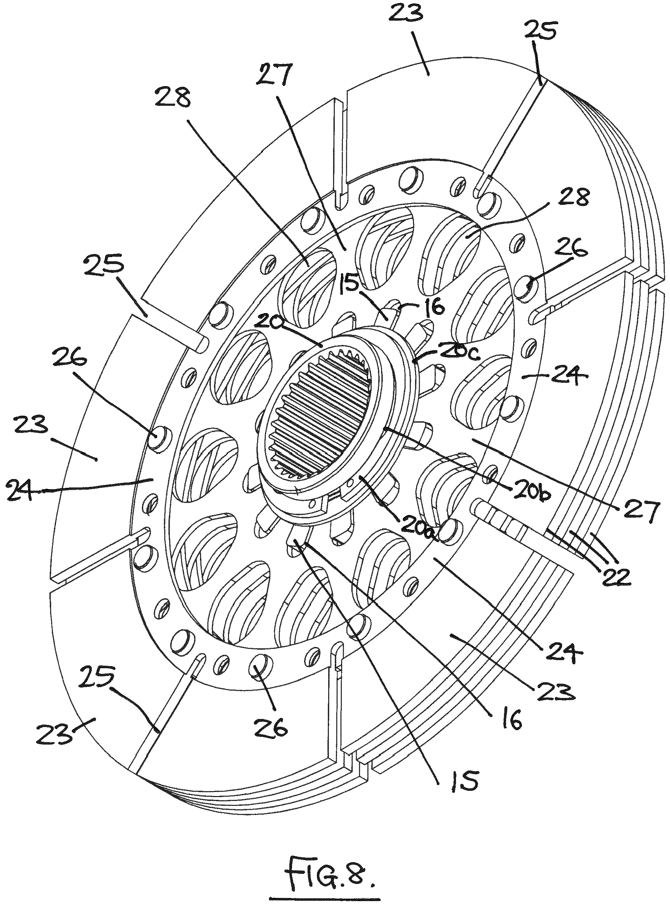

Figure 5 shows a stack of two clutch plates 10 with a different array of tear drop shaped apertures 17 for use in a multi-plate clutch in which the plates 10 are interleaved with plates 19 carried on a housing of the clutch (not shown). The plates 10 are mounted on a common hub member 20 which has drive formations 15 which cooperate with slots 16 as described above. IN this arrangement and in the arrangement shown in Figures 7 and 8 the drive formations 15 and slots 16 are parallel sided and not radially tapered. The plates 10 are located on the hub 20 by a circlip 20a engaging a groove 20b in the hub 20 and backed by a stop ring 20c. A similar circlip and stop ring may be provided on the other side of the plate stack or a locating shoulder can be provided on the hub. In some installations the plates can be located by circlips only on both sides of the plate stack.

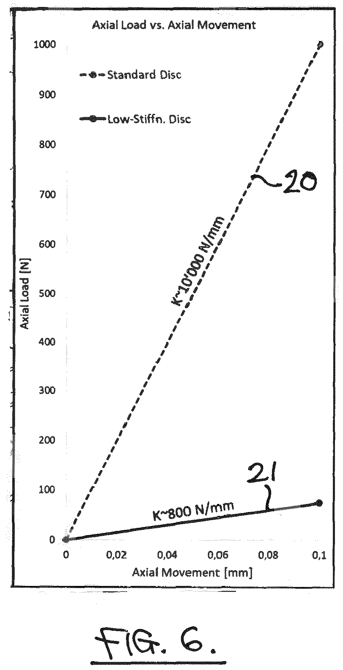

If the stiffness of a standard clutch plate without the apertures 17 and 18 is compared with the stiffness of a typical apertured clutch plate in accordance with the present invention at the same levels of load, stress and material thickness it will be found that, depending on the compromise chosen between stiffness and fatigue resistance, stiffness reductions of 90 to 95% can be achieved. This is shown in Figure 6 in which curve 20 shows the variation of axial movement versus axial load for a standard clutch plate having a solid drive disc (10,000 N/mm) whereas curve 21 shows the variation of axial movement versus axial load for a clutch plate in accordance with the present invention having an apertured drive disc (800 N/mm) giving a stiffness reduction of the order of 90%.

When high torques are to be transmitted through a clutch it is often necessary to employ higher grade and higher hardness steel for the drive disc which is not compatible with the bonding/ sintering processes used to deposit the friction facing material directly onto the outer peripheral portion of the drive disc. It is therefore necessary to use rivets or other mechanical methods of securing the friction material to the drive disc.

Figures 7 and 8 show such a clutch plate 22 in which friction material segments 23 are bonded onto both sides of a lower carbon annular support disc 24, provided with the customary thermal relief slots 25, which is then rivetted at 26 to the outer peripheral portion of a high carbon drive disc 27 provided with tear drop shaped apertures 28. Such plates 22 can be used in single plate clutches or, as shown in Figure 8, a stack of such pates can be mounted on a common splined hub member29 for use in a multi-plate clutch.

The use of a rivetted attachment of the friction material with a high carbon drive disc 27 ensures high axial flexibility of the clutch plate as well as ensuring a high limit of fatigue resistance (up to 3 to 4 times increase) when compared to a clutch plate using a lower carbon steel drive disc and bonded friction material.

As indicated above, Figures 9A to 9I show examples of different aperture arrays suitable for use on the drive disc 12 of a clutch plate 10 in accordance with the present invention.

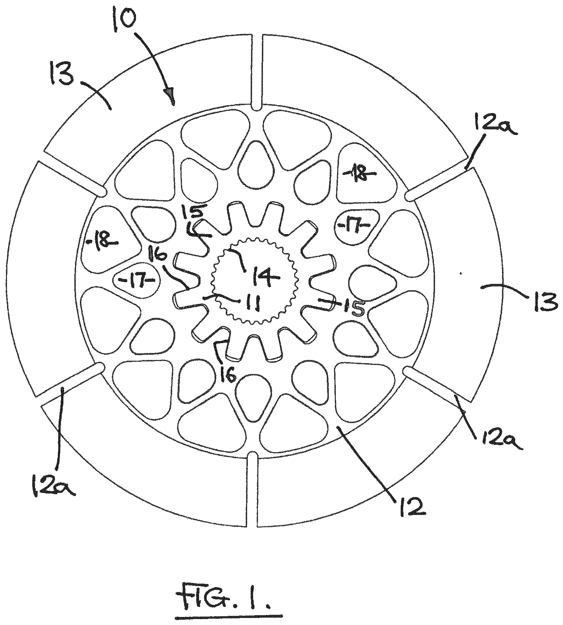

Figure 9A shows the array used in the clutch disc of Figures 7 and 8 whereas Figure 9H shows the array used in Figure 1. In Figure 9B two sizes of tear drop shaped apertures are used with addition circular apertures in the outer peripheral zone of the drive disc.

Figure 9C uses a different array of two sizes of tear drops and more small circular apertures around the outer peripheral portion of the drive disc. Figure 9D uses two inner bands of circular apertures encircled by a band of generally kidney shaped apertures whereas Figures 9E and 9F use bands of circular apertures. In Figures 9G to 9I bands of Tear drops and triangles with rounded corners are positioned to give different thicknesses of webs in drive disc material between the apertures to adjust the flexibility and stress concentrations of the drive disc.

The present invention thus provides a clutch plate with increased radial and axial flexibility to assist in alleviating the radial and axial vibrations and a hub arrangement which also accommodates misalignments which can occur in driveline clutches.

## Claims

1. A clutch plate comprising a central hub member and a drive disc drivably connected with the hub on which a radially outer friction facing material is carried, the hub member having inner splines for connection with a drive shaft and outer radially extending drive formations engaged with clearance in complementary drive formations in the inner periphery of the drive disc to allow the hub member to float radially relative to the drive disc, the drive disc having an array of circumferentially spaced apertures therein to reduce the radial and axial stiffness of the disc so that the floating connection between the hub member and the drive disc and the drive disc aperture array accommodates axial and radial vibration pulsations in the clutch disc and any radial misalignments in the associated clutch when the clutch plate is transmitting torque.

2. A clutch plate according to claim 1 in which the array of apertures includes circumferentially spaced generally tear drop shaped apertures.

3. A clutch plate according to claim 1 in which the array of apertures includes circumferentially spaced generally triangular apertures with rounded corners.

4. A clutch plate according to claim I in which the array of apertures includes circumferentially spaced generally circular apertures.

5. clutch plate according to claim 1 in which the array of apertures includes circumferentially spaced generally kidney shaped apertures.

6. A clutch plate according to any one of claims 1 to 5 in which the drive formations in the inner periphery of the disc comprise radially outwardly extending slots having curved radially outermost ends to reduce stress concentrations in the disc, these slots receiving the radially outwardly extending formations on the hub member with sufficient clearance to allow the hub member to float relative to the drive disc to accommodate the vibration pulsations in the clutch disc and any radial misalignments in the associated clutch.

7. A clutch disc according to any one of claims 1 to 4 in which the outer friction material is bonded to an outer peripheral portion of the drive disc.

8. A clutch disc according to any one of claims 1 to 4 in which the outer friction material is mounted on a metal support which is rivetted or otherwise mechanically secured to the outer periphery of the drive disc.
